# FASCICULE DE BREVET EUROPEEN

(11) **EP 0 762 956 B1**
(45) Date de publication et mention de la délivrance du brevet: **11.11.1998**
(21) Numéro de dépôt: 95922474.2
(22) Date de dépôt: 23.05.1995
(51) Int. Cl.: B60C 25/00

(54) **PROCEDE DE MONTAGE D'UN ENSEMBLE FORME D'UN PNEUMATIQUE ET D'UN APPUI DE SOUTIEN DE BANDE ROULEMENT**
VERFAHREN ZUM ZUSAMMENBAU EINER ANORDNUNG VON REIFEN UND NOTLAUFSTÜTZRING
PROCESS FOR MOUNTING AN ASSEMBLY FORMED OF A TYRE AND A TREAD SUPPORT

(30) Priorité: 09.06.1994 FR 9407164
(43) Date de publication de la demande: 19.03.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: MUHLHOFF, Olivier, F-63100 Clermont-Ferrand (FR)
(74) Mandataire: Devaux, Edmond-Yves
(86) Numéro de dépôt international: EP9501954
(87) Numéro de publication internationale: WO9533628

(56) Documents cités:
- FR-A- 2 560 121
- US-A- 1 944 767
- US-A- 4 212 338

## Description

La présente invention a pour objet une méthode de montage, sur une jante de service, d'un ensemble formé d'une part par un pneumatique à armature de carcasse radiale et d'autre part par un anneau de soutien de bande de roulement amovible, et plus particulièrement d'un ensemble destiné à être monté sur une jante monobloc dont au moins un des sièges est incliné vers l'extérieur.

Comme décrit dans les demandes françaises FR 2.699.912, FR 2.713.558 et FR 2.713.557 non publiées à la date de priorité de la demande internationale de brevet, une telle jante ayant, vue en section méridienne, un premier siège dont l'extrémité axialement extérieure est sur un cercle de diamètre inférieur au diamètre du cercle sur lequel se trouve l'extrémité axialement intérieure (un tel siège est dit incliné vers l'extérieur), une portée plus ou moins grande destinée à recevoir un anneau de soutien de bande de roulement amovible, éventuellement une gorge de montage, et un deuxième siège de jante, soit identique, soit différent du premier siège de jante, forme avec un pneumatique dont le profil méridien d'armature de carcasse et dont la forme des bourrelets sont adaptés, et avec un appui de soutien amovible un ensemble roulant performant dans le cas d'un roulage à faible pression ou même à pression nulle.

Les diamètres nominaux de ces sièges peuvent être égaux, mais ils sont préférentiellement inégaux.

La demande française FR 2.699.121, non publiée à la date de priorité de la demande internationale de brevet, décrit une méthode de montage d'un pneumatique sur une jante du type considéré. Ladite méthode consiste d'abord à monter un bourrelet pour arriver à le faire glisser jusqu'à la gorge de montage, et à introduire ensuite l'appui, amovible et caoutchouteux, à l'état ovalisé pour l'enfiler sur la portée cylindrique prévue à cet effet.

Cette méthode limite la largeur axiale de l'appui de soutien, et n'est pas très aisée à mettre en oeuvre pour le garagiste moyennement outillé.

Afin de remédier à de tels inconvénients et améliorer la facilité de montage du pneumatique, comprenant un premier bourrelet et un deuxième bourrelet, et de l'appui de soutien amovible qui l'accompagne, sur une jante de montage monobloc, comprenant un premier et un deuxième sièges de jante, au moins le premier siège de jante étant incliné vers l'extérieur, prolongé axialement à l'extérieur par une saillie de faible hauteur, et réuni axialement à l'intérieur à une portée destinée à recevoir l'appui de soutien de bande de roulement, le deuxième siège de jante ayant son extrémité axialement intérieure sur un cercle de diamètre supérieur au diamètre du cercle sur lequel se trouve l 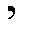 extrémité axialement intérieure du premier siège de jante, le procédé de montage, conforme à l'invention, consiste :
- à introduire, en premier lieu, l'appui de soutien à l'intérieur du pneumatique, puis
- à présenter sur la jante le deuxième bourrelet du côté opposé au deuxième siège de jante, puis à le faire passer sur la portée de jante à l'aide de moyens de mise en place;
- à monter sur le premier siège de jante le premier bourrelet.
- à effectuer les dernières étapes de montage.

Le montage d'un pneumatique sur jante commence toujours par la présentation du pneumatique d'un côté de la jante, et, par convention de langage, le bourrelet présenté le premier est le deuxième bourrelet, c'est-à-dire le bourrelet qui sera monté sur le siège de jante situé du côté opposé au côté où l'on commence le montage, ledit siège de jante étant le deuxième siège de jante.

La forme, sous laquelle se trouve l'appui de soutien avant d'être introduit dans le pneumatique, doit permettre ladite introduction ; ainsi l'appui de soutien peut être ovalisé tel que le petit axe de l'ovale obtenu après déformation soit inférieur au diamètre du siège de bourrelet du pneumatique par lequel doit passer l'appui : il peut être cloqué de sorte que la distance maximale entre deux de ses points soit inférieure au diamètre dudit bourrelet du pneumatique : il peut conserver son état initial, la déformation dudit bourrelet de pneumatique étant alors nécessaire.

Les moyens de mise en place d'un bourrelet varient selon la forme de la jante de service et selon la largeur axiale de l'appui de soutien. Si la jante possède une gorge de montage, la présentation du deuxième bourrelet de pneumatique sur la jante, son passage sur la portée, par exemple cylindrique, de jante et son montage exige alors des moyens mécaniques tels que, comme connu, des leviers de montage, des roulettes qu'on applique sur les bourrelets, ou une presse de montage. Si le diamètre nominal du deuxième siège de jante est supérieur à celui du premier siège, et dans le cas d'un appui de largeur inférieure à la distance axiale séparant les deux bourrelets après montage, le moyen de mise en place du deuxième bourrelet peut se résumer à une simple pression dans le sens axial de l'ensemble pneumatique-appui.

Quel que soit le type de jante considéré dans la présente invention, afin de faciliter la mise en place du premier bourrelet sur le premier siège de jante, il est avantageux de placer de manière adjacente et axialement à l'extérieur dudit premier siège un anneau circulaire métallique à génératrice radialement extérieure tronconique.

L'invention est illustrée par le dessin annexé à la description, montrant les différentes étapes de montage dans le cas de plusieurs jantes de montage, dessin sur lequel :
- les figures 1A à 1C représentent schématiquement l'étape commune aux différents montages quelle que soit la jante de montage, et selon trois formes possibles de l'appui de soutien avant introduction,
- les figures 2A à 2D représentent schématiquement les étapes ultérieures dans le cas d'une jante selon une première variante,
- les figures 3A à 3C représentent schématiquement les étapes ultérieures dans le cas d'une jante selon une seconde variante,
- les figures 4A et 4B représentent toujours schématiquement les mêmes étapes dans le cas d'une jante selon une autre variante,
- la figure 5 montre de façon schématique la présence possible d'un anneau circulaire, axialement du côté du premier siège de jante.

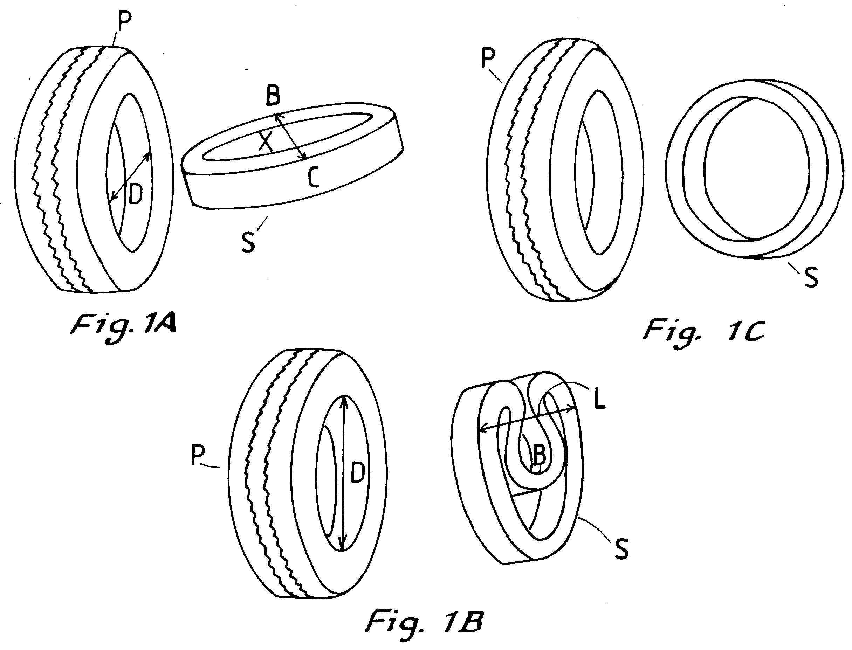

Sur les figures 1A à 1C est montrée la première opération du montage, conforme à l'invention, d'un pneumatique P, d'architecture, en particulier des bourrelets, adaptée pour être monté sur la jante de service considérée. Dans ce pneumatique P est inséré l'appui de soutien S. Dans le cas de la figure 1A, l'appui de soutien S a été préalablement ovalisé par pression en deux points B et C radialement extérieurs et diamétralement opposés, de manière à ce que la distance X séparant lesdits deux points soit inférieure au diamètre extérieur initial de l'appui et inférieure au diamètre D du siège de bourrelet du pneumatique P. L'appui de soutien est alors introduit à l'intérieur du pneumatique P perpendiculairement au plan de la tringle de renforcement du bourrelet. Dans le cas de la figure 1B, l'appui de soutien S est, avant introduction dans le pneumatique P, cloqué par pression en un seul point B de sa circonférence extérieure, de sorte qu'approximativement. une moitié de l'appui soit pliée dans son plan en rentrant dans l'autre moitié, ce qui permet d'obtenir la distance rectiligne maximale L entre deux points de la circonférence extérieure de l'appui inférieure au diamètre D du siège de bourrelet du pneumatique P. L'introduction dans le pneumatique P se fait alors parallèlement au plan de la tringle de bourrelet. Il est évident que, dans les deux exemples décrits ci-dessus, l'appui de soutien S doit être constitué de matériau permettant les déformations décrites ; il est alors avantageusement en matériau élastomère vulcanisable. Il est possible d'utiliser un appui de soutien S en matériau plus rigide, en particulier en matière plastique. La figure 1C montre alors comment est introduit l'appui de soutien dans le pneumatique P : l'appui de soutien S est présenté perpendiculairement au plan contenant la tringle de bourrelet et l'appui est introduit dans le pneumatique après ovalisation de ladite tringle et du bourrelet qui la contient.

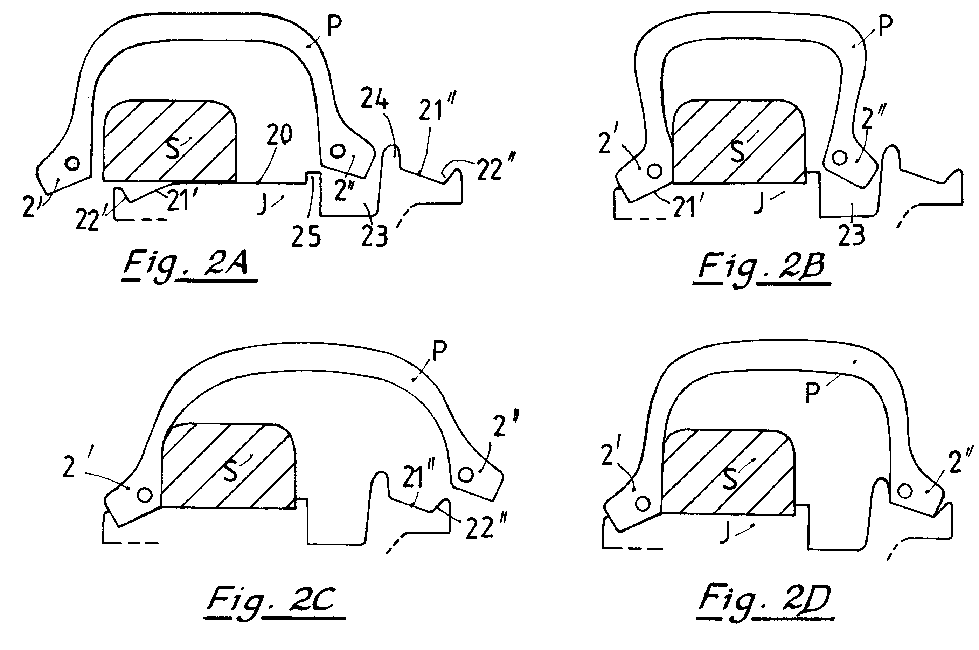

Sur les figures 2A à 2D, la jante de montage J est une jante comprenant, de part et d'autre de son plan équatorial et vue en section méridienne, un premier (21') et un second (21'') sièges de jante dits inclinés vers l'extérieur, c'est-à-dire des sièges dont les extrémités axialement extérieures sont sur des cercles de diamètres inférieurs aux diamètres des cercles sur lesquels se trouvent les extrémités axialement intérieures, ces deux sièges (21') et (21'') étant réunis axialement à l'extérieur à des saillies (22') et (22'') de faible hauteur, destinées à bloquer les bourrelets. Le premier siège (21') est réuni axialement à l'intérieur à une portion cylindrique (20) de jante, portion destinée à recevoir l'appui de soutien S par exemple en vulcanisat caoutchouteux, alors que le deuxième siège de jante (21'') est réuni axialement à l'intérieur à un rebord de jante (24). Ledit rebord (24) définit avec la portion cylindrique (20), munie d'une saillie de positionnement (25) à son extrémité axialement à l'intérieur, une gorge de montage (23). Les deux sièges de jante (21') et (21'') ont, dans l'exemple décrit non limitatif des diamètres inégaux, le diamètre de l'extrémité axialement intérieure du siège (21'') étant légèrement supérieur au diamètre de l'extrémité axialement intérieure du siège (21'), la différence étant de 16 mm.

Après avoir introduit l'appui de soutien S dans le pneumatique P, l'ensemble ainsi formé est monté sur la jante J, en présentant le deuxième bourrelet (2'') par le côté opposé au côté ayant le rebord de jante (24), pour parvenir au schéma de la figure 2A, c'est-à-dire avec le deuxième bourrelet dans la gorge de montage (23). On monte ensuite le premier bourrelet (2') du pneumatique P sur son siège (21') (figure 2B), le deuxième bourrelet (2'') étant toujours dans la gorge de montage (23), à l'aide de simples leviers de montage par exemple. On termine alors le montage en sortant le deuxième bourrelet (2'') de la gorge de montage pour l'amener axialement à l'extérieur de la saillie (22'') bordant le deuxième siège de jante (21'') (figure 2C), puis en plaçant ledit deuxième bourrelet (2'') sur son siège de jante (21'') pour parvenir à l'ensemble formé par le pneumatique P, la jante J et l'appui de soutien S, tel que montré sur la figure 2D. Le montage est alors définitivement terminé par le gonflage de l'ensemble.

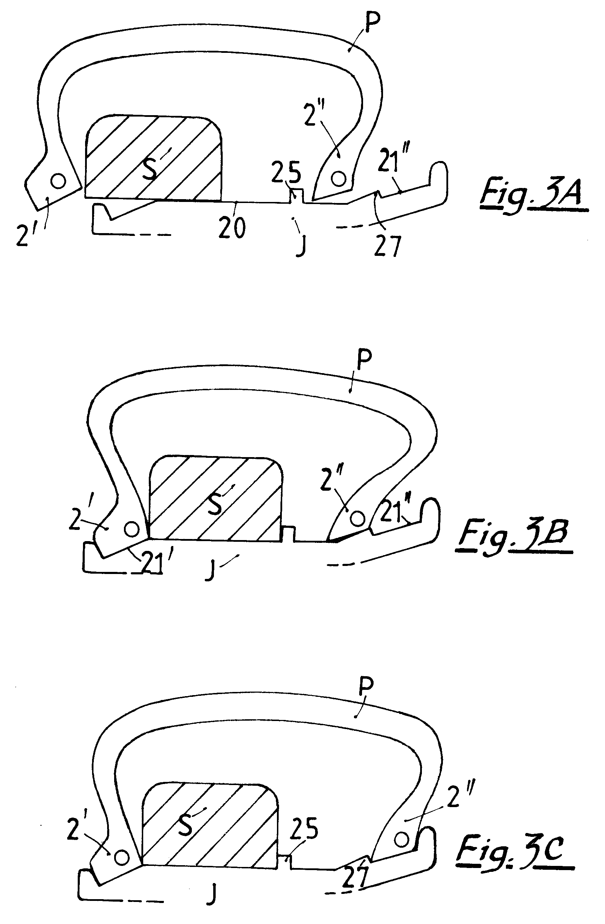

Il est possible d'utiliser une jante J telle que montrée sur la figure 3 de la demande non publiée FR 2.713 557, c'est-à-dire une jante J du type considéré, sans gorge de montage, avec une portion cylindrique (20) munie axialement à l'intérieur d'une saillie de positionnement (25) de l'appui de soutien S et avec un deuxième siège de jante (21'') incliné vers l'intérieur. Ce deuxième siège de jante (21'') est d'une part réuni axialement à l'intérieur à une saillie de blocage (27) du deuxième bourrelet (2''), et prolongé axialement à l'extérieur par un rebord de jante usuel (24). Dans ce cas aussi, après avoir introduit l'appui de soutien S dans le pneumatique P, l'ensemble est enfilé sur la jante J (figure 3A) et on monte le premier bourrelet (2') sur le premier siège de jante (21') sans se préoccuper de la position du deuxième bourrelet (2'') (figure 3B), la mise sous pression de la cavité intérieure du pneumatique servant de dispositif de mise en place du deuxième bourrelet, pour parvenir à l'ensemble monté (figure 3C).

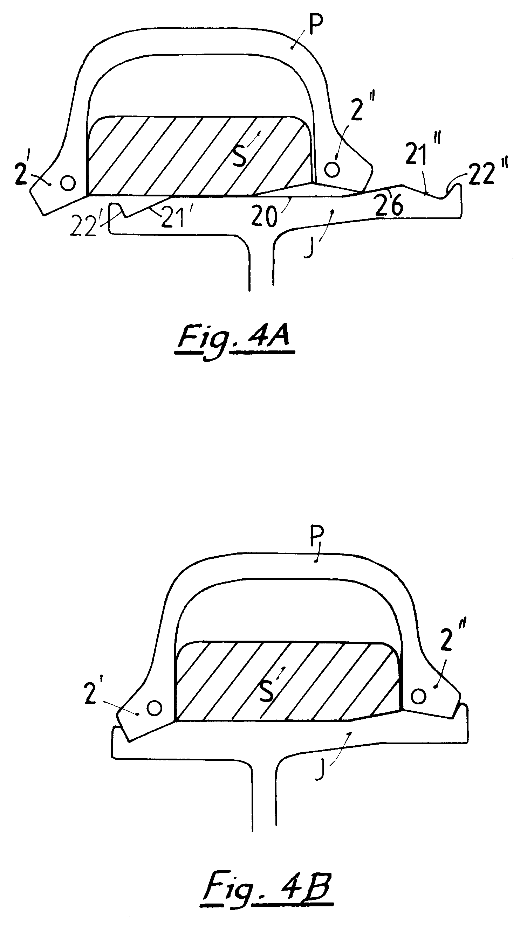

Une autre variante, conforme à l'invention, est illustrée sur les figures 4A et 4B. Elle concerne le montage sur une jante J de l'espèce considérée, mais ne comprenant ni gorge de montage ni rebord de jante axialement intérieur, ladite jante J pouvant avoir, soit deux sièges inclinés vers l'extérieur, soit un premier siège incliné vers l'extérieur et un deuxième siège incliné vers l'intérieur ou non incliné. Un siège de jante est dit incliné vers l'intérieur lorsque son extrémité axialement intérieure est sur un cercle de diamètre inférieur au diamètre du cercle sur lequel se trouve son extrémité axialement extérieure. Un siège de jante est dit non incliné lorsque sa génératrice est parallèle à l'axe de rotation de la jante. L'exemple décrit concerne le montage sur une jante comprenant un premier siège de jante (21') incliné vers l'extérieur et n'uni axialement à l'extérieur d'une saillie (22') et d'un deuxième siège de jante (21''), incliné vers l'extérieur et muni axialement à l'extérieur d'une saillie (22''). Le premier siège (21') est réuni axialement à l'intérieur à une portion cylindrique (20). Le deuxième siège (21''), ayant une extrémité axialement intérieure sur un cercle de diamètre supérieur au diamètre du cercle sur lequel se trouve l'extrémité axialement intérieure du premier siège de jante (21'), est prolongé axialement à l'intérieur par une partie tronconique (26) formant liaison avec la portion cylindrique (20). Comme dans les variantes ci-dessus illustrées, la première étape du procédé de montage consiste à introduire l'appui de soutien S de bande de roulement dans le pneumatique P, ledit appui pouvant être de grande largeur, par exemple égale à la distance axiale séparant les deux bourrelets du pneumatique montés sur jante. La deuxième étape consiste simplement à enfiler sur la portion cylindrique de jante l'ensemble ainsi formé (figure 4A). Sans se préoccuper du placement du deuxième bourrelet (2'') qui sera automatiquement mis en place sur son siège de jante, la troisième étape consiste à monter le premier bourrelet (2') sur son siège (21') (figure 4B) à l'aide d'une presse par exemple. Comme dans tous les cas, la dernière étape consiste à gonfler le pneumatique.

Les mêmes opérations de montage (non montrées) que celles décrites ci-dessus et montrées sur les figures 4A et 4B sont possibles dans le cas où la jante de montage. toujours démunie de gorge; et ayant une portion cylindrique (20) de largeur égale à la distance axiale séparant les deux bourrelets montés sur jante, possède un deuxième siège de jante (21'') incliné vers l'intérieur et dont l'extrémité axialement intérieure est sur un cercle de diamètre au moins égal au diamètre du cercle sur lequel se trouve l'extrémité axialement intérieure du premier siège de jante (21'), ledit deuxième siège (21'') étant prolongé axialement à l'extérieur par un rebord de jante de configuration semblable à celle des rebords de jante connus, usuels et normalisés.

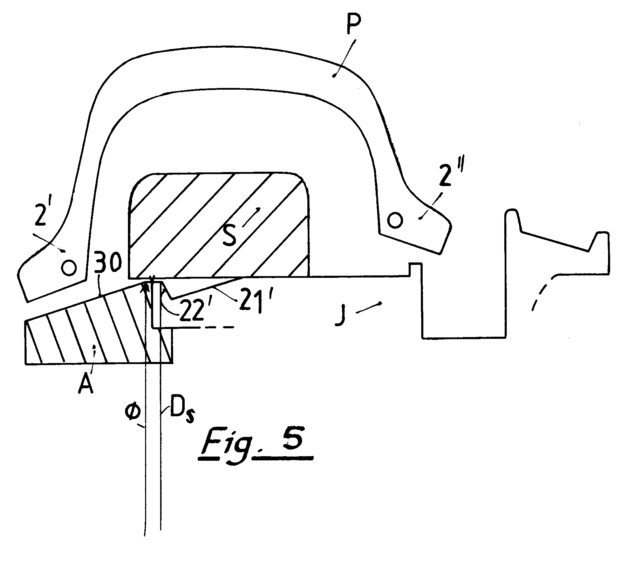

La figure 5 illustre la possibilité d'adjoindre axialement à la première saillie (22') de la jante un anneau auxiliaire (A) de mise en place du premier bourrelet (2') sur son siège de jante (21'). Cet anneau (A) possède une section transversale dont le côté radialement extérieur (30) est une génératrice tronconique. Ladite génératrice tronconique (30) a une extrémité axialement intérieure sur un cercle de diamètre ⌀ égal au diamètre maximal D_{S} de la face radialement extérieure de la saillie (22') axialement adjacente. et une extrémité axialement extérieure sur un cercle de diamètre plus petit que ⌀, telle qu'elle fasse avec la direction parallèle à l'axe de rotation de l'ensemble un angle compris entre 5° et 20°. Ledit anneau amovible est fixé à la jante J par des moyens de fixation quelconques et connus, tel que, par exemple, la soudure, associée ou non à une fixation par vis.

Quant au démontage d'un ensemble formé par le pneumatique et l'appui de soutien de la bande de roulement, il ne présente aucune difficulté, quelle que soit la jante utilisée. Une pression sur le deuxième bourrelet au moyen d'un appareillage convenable, et plus ou moins élevée suivant la configuration de la jante, permet le délogement dudit bourrelet pour l'amener axialement à l'intérieur. Le délogement du premier bourrelet de son siège de jante ne pose aucun problème supplémentaire, ne nécessitant, de la même manière, que l'exercice d'une simple pression sur sa paroi, et l'emploi de simple outillage.

## Revendications

1. Procédé de montage sur une jante monobloc J, comprenant un premier (21') et un deuxième (21'') sièges de jante, au moins le premier siège de jante (21') étant incliné vers l'extérieur, prolongé axialement à l'extérieur par une saillie (22') de faible hauteur et réuni axialement à l'intérieur à une portée (20) destinée à recevoir un appui de soutien S de bande de roulement, le deuxième siège de jante (21 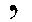 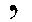 ) ayant son extrémité axialement intérieure sur un cercle de diamètre supérieur au diamètre de cercle sur lequel se trouve l 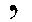 extrémité axialement intérieure du premier siège de jante (21 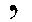 ), d'un pneumatique P comprenant un premier bourrelet (2') et un deuxième bourrelet (2'') qui seront montés respectivement sur le premier (21') et le deuxième (21'') sièges de jante et d'un appui de soutien S, amovible, caractérisé en ce que :
- l'on introduit, dans une première étape, ledit appui S dans le pneumatique P,
- l'on présente sur la jante J le deuxième bourrelet (2''), du côté opposé au deuxième siège de jante (22''), puis on le fait passer sur la portée (20) de jante à l'aide de moyens de mise en place,
- l 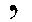 on monte sur le premier siège de jante (21 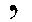 ) le premier bourrelet (2 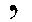 )
- l'on effectue ensuite les dernières étapes du montage.

2. Procédé de montage selon la revendication 1, caractérisé en ce que l'appui S est ovalisé, par pression en deux points diamétralement opposés, avant introduction dans le pneumatique P, ladite introduction se faisant perpendiculairement au plan de la tringle de renforcement de bourrelet.

3. Procédé de montage selon la revendication 1, caractérisé en ce que l'appui S est déformé par cloquage avant introduction dans le pneumatique P, ladite introduction se faisant parallèlement au plan de la tringle de renforcement de bourrelet.

4. Procédé de montage selon la revendication 1, caractérisé en ce que l'introduction de l'appui S se fait perpendiculairement au plan de la tringle de renforcement de bourrelet avec ovalisation de ladite tringle.

5. Procédé de montage selon l'une des revendications 1 à 4, sur une jante J comprenant une portion cylindrique (20) munie axialement à l'intérieur d'une saillie de positionnement (25) de l'appui de soutien, et réunie, au moins par l'intermédiaire d'un rebord de jante (24), à un deuxième siège de jante (21'') incliné vers l'extérieur, caractérisé en ce que les dernières étapes du montage consistent chronologiquement :
- a ressortir le deuxième bourrelet de la portion cylindrique (20) jusqu'à l'amener à l'extérieur de la jante,
- à monter le deuxième bourrelet (2'') sur le deuxième siège de jante (21'').
- à gonfler l'ensemble.

6. Procédé de montage selon la revendication 5, sur une jante J comprenant au moins une gorge de montage (23) axialement adjacente au rebord de jante (24), caractérisé en ce que la première étape, réalisée après avoir présenté sur la jante J le deuxième bourrelet (2''), consiste à introduire ledit deuxième bourrelet dans la gorge de montage (23).

7. Procédé de montage selon l'une des revendications 1 à 4, sur une jante comprenant un deuxième siège de jante (21''), ayant une extrémité axialement intérieure sur un cercle de diamètre supérieur au diamètre du cercle sur lequel se trouve l'extrémité axialement intérieure du premier siège de jante (21'), sans rebord axialement intérieur, et dont la portion cylindrique (20) est démunie de saillie de positionnement (25) d'appui de soutien S, caractérisé en ce que les dernières étapes de montage consistent chronologiquement :
- à pousser l'ensemble jusqu'à mise en place du premier bourrelet (2') sur son siège de jante (21'), le deuxième bourrelet (2'') se mettant de lui-même en place sur le deuxième siège de jante (21'') sous l'effet de la poussée de l'appui de soutien S, puis
- à gonfler l'ensemble.

8. Procédé de montage selon l'une des revendications 1 à 4, sur une jante J comprenant un deuxième siège de jante (21''), ayant une extrémité axialement intérieure sur un cercle de diamètre supérieur au diamètre du cercle sur lequel se trouve l'extrémité axialement intérieure du premier siège de jante (21'), ladite jante J n'ayant pas de rebord axialement intérieur, et dont la portion cylindrique (20) est munie d'une saillie de positionnement (25) de l'appui de soutien S, caractérisé en ce que les dernières étapes de montage consistent chronologiquement :
- à pousser l'ensemble jusqu'à mise en place du premier bourrelet (2') sur son siège de jante (21'),
- à gonfler l'ensemble, le deuxième bourrelet (2'') se mettant de lui-même en place sur le deuxième siège de jante (21'') sous l'effet de la pression de gonflage.

9. Procédé de montage selon l'une des revendications 7 ou 8, caractérisé en ce qu'on utilise une jante J comprenant un deuxième siège de jante (21''), incliné vers l'extérieur, muni axialement à l'extérieur d'une saillie (22''), et prolongé axialement à l'intérieur par une partie tronconique (26) formant liaison avec la portion cylindrique (20).

10. Procédé de montage selon l'une des revendications 7 ou 8, caractérisé en ce qu'on utilise une jante J comprenant un deuxième siège de jante (21''), incliné vers l'intérieur, prolongé axialement à l'intérieur par la portion cylindrique (20) et muni axialement à l'extérieur d'un rebord de jante de configuration semblable à celle des rebords de jante connus, usuels et normalisés.

11. Procédé de montage selon l'une des revendications 1 à 10, caractérisé en ce qu'on utilise axialement à l'extérieur de la saillie (22') et prolongeant le premier siège de jante (21') un anneau A circulaire métallique, présentant une section méridienne dont le côté radialement extérieur est une génératrice tronconique (3), faisant avec la direction parallèle à l'axe de rotation de l'ensemble un angle compris entre 5° et 20° et dont l'extrémité axialement intérieure est sur un cercle de diamètre égal au diamètre maximal de la saillie (22'), ledit anneau étant réuni à la jante J par des moyens de fixation.

12. Procédé de montage selon la revendication 11, caractérisé en ce que l'anneau A est amovible.

## Claims

1. A method for mounting, on an integral rim J, comprising a first (21*'*) and a second (21'') rim seat, at least the first rim seat (21*'*) being inclined towards the outside, extended axially on the outside by a protrusion (22*'*) of low height and joined axially on the inside to a cylindrical bearing surface (20) intended to receive a tread bearing support S, the second rim seat (21'') having its axially inner end located on a circle of diameter greater than the diameter of the circle on which the axially inner end of the first rim seat (21*'*) is located, a tyre P comprising a first bead (2*'*) and a second bead (2'') which will be mounted respectively on the first (21') and the second (21'') rim seats, and a removable bearing support S, characterised in that
- said support S is introduced into the tyre P in a first step,
- the second bead (2'') is presented on the rim J on the side opposite the second rim seat (22''), then it is passed over the rim bearing surface (20) by means of placement means,
- the first bead (2*'*) is mounted on the first rim seat (21*'*), and
- the final mounting steps are then effected.

2. A mounting method according to Claim 1, characterised in that the support S is ovalised by pressure at two diametrically opposed points before introduction into the tyre P, said introduction being effected perpendicular to the plane of the bead wire for reinforcing the bead.

3. A mounting method according to Claim 1, characterised in that the support S is deformed by bulging before introduction into the tyre P, said introduction being effected parallel to the plane of the bead wire for reinforcing the bead.

4. A mounting method according to Claim 1, characterised in that the introduction of the support S is effected perpendicular to the plane of the bead wire for reinforcing the bead with ovalisation of said bead wire.

5. A method according to one of Claims 1 to 4, for mounting on a rim J comprising a cylindrical portion (20) provided axially on the inside with a positioning protrusion (25) for the bearing support, and joined, at least by means of a rim flange (24), to a second rim seat (21''), inclined towards the outside, characterised in that the last steps of the mounting operation consist chronologically of:
- bringing out the second bead from the cylindrical portion (20) until it is brought to the outside of the rim,
- mounting the second bead (2'') on the second rim seat (21''),
- inflating the assembly.

6. A method according to Claim 5, for mounting on a rim J comprising at least one mounting groove (23) axially adjacent to the rim flange (24), characterised in that the first step, effected after having presented the second bead (2'') on the rim J, consists of introducing said second bead into the mounting groove (23).

7. A method according to one of Claims 1 to 4, for mounting on a rim comprising a second rim seat (21'') having an axially inner end located on a circle of diameter greater than the diameter of the circle on which the axially inner end of the first rim seat (21*'*) is located, without axially inner flange, and the cylindrical portion (20) of which is without a positioning protrusion (25) for the bearing support S, characterised in that the final steps of mounting consist chronologically of:
- pushing the assembly until the first bead (2*'*) is positioned on its rim seat (21*'*), the second bead (2'') automatically becoming positioned on the second rim seat (21'') under the action of the thrust of the bearing support S, and then
- inflating the assembly.

8. A method according to one of Claims 1 to 4, for mounting on a rim J comprising a second rim seat (21''), having an axially inner end located on a circle of diameter greater than the diameter of the circle on which the axially inner end of the first rim seat (21*'*) is located, said rim J not having an axially inner flange, and the cylindrical portion (20) of which is provided with a positioning protrusion (25) for the bearing support S, characterised in that the last steps of the mounting operation consist chronologically of:
- pushing the assembly until the first bead (2') is positioned on its rim seat (21*'*), and
- inflating the assembly, the second bead (2'') automatically becoming positioned on the second rim seat (21'') under the action of the inflation pressure.

9. A mounting method according to one of Claims 7 or 8, characterised in that a rim J is used comprising a second rim seat (21'') inclined towards the outside, provided axially on the outside with a protrusion (22''), and extended axially on the inside by a frustoconical part (26) forming a link with the cylindrical portion (20).

10. A mounting method according to one of Claims 7 or 8, characterised in that a rim J is used comprising a second rim seat (21'') inclined towards the inside, extended axially on the inside by the cylindrical portion (20) and provided axially on the outside with a rim flange of configuration similar to that of known, conventional, standardised rim flanges.

11. A mounting method according to one of Claims 1 to 10, characterised in that a circular metal ring A is used axially on the outside of the protrusion (22*'*) and extending the first rim seat (21*'*), which ring has a meridian section, the radially outer side of which is a frustoconical generatrix (3), forming an angle of between 5° and 20° with the direction parallel to the axis of rotation of the assembly, the axially inner end of which is located on a circle of diameter equal to the maximum diameter of the protrusion (22*'*), said ring being joined to the rim J by fixing means.

12. A mounting method according to Claim 11, characterised in that the ring A is removable.

## Patentansprüche

1. Verfahren Zur Montage auf einer einstückigen Felge J, mit einem ersten (21') und einem zweiten (21'') Felgensitz, wobei mindestens der erste Felgensitz (21') dann außen geneigt, axial nach außen um einen Vorsprung (22') geringer Höhe verlängert und axial auf der Innenseite mit einem Bereich (20) verbunden ist, der dazu bestimmt ist, eine Laufflächen-Stützauflage S aufzunehmen, und wobei der zweite Felgensitz (22'') mit seinem axial innenliegenden Ende auf einem Kreis mit einem Durchmesser liegt, der größer ist als der Durchmessere des Kreises, auf dem sich das axial innere Ende des ersten Felgensitzes (21' ) befindet, eines Reifens P, der einen ersten Wulst (2') und einen zweiten Wulst (2'') aufweist, die auf dem ersten (21') beziehungsweise zweiten (21'') Felgensitz montiert sein werden, sowie einer abnehmbaren Stützauflage S,
dadurch gekennzeichnet, daß
- man in einem ersten Schritt die genannte Auflage S in der Reifen P einführt,
- man auf der Felge J den zweiten Wulst (2'') auf der Seite, die dem zweiten Felgensitz (22'') gegenüberliegt, darbietet und dann durch Einsetzmittel veranlaßt, auf dem Bereich (20) der Felge weiterzulaufen,
- man auf dem ersten Felgensitz (21') den ersten Wulst (2') montiert, und
- man nachfolgend die letzten Montageschritte bewirkt.

2. Montageverfahren nach Anspruch 1, dadurch gekennzeichnet, daß die Auflage S durch Druck auf zwei diametral gegenüberliegende Punkte vor dem Einführen in den Reifen P oval verformt wird, wobei das genannte Einführen senkrecht zur Ebene des Verstärkungs-Wulstkernes des Wulstes erfolgt.

3. Montageverfahren nach Anspruch 1, dadurch gekennzeichnet, daß die Auflage S durch Einbuchten vor dem Einführen in den Reifen P verformt wird, wobei das genannte Einfuhren parallel zur Ebene des Verstärkungs-Wulstkernes erfolgt.

4. Montageverfahren nach Anspruch 1, dadurch gekennzeichnet, daß das Einführen der Auflage S senkrecht zur Ebene des Verstärkungs-Wulstkernes des Wulstes mit einem Ovalverformen des genannten Wulstkernes erfolgt.

5. Montageverfahren nach einem der Ansprüche 1 bis 4, auf einer Felge J, die einen zylindrischen Abschnitt (20) aufweist, der axial auf der Innenseite mit einem Positionierungsvorsprung (25) für die Stützauflage versehen ist und mittels mindestens einer Felgenleiste (24) mit einem zweiten Felgensitz (21'') vereint ist, der nach außen geneigt ist,
dadurch gekennzeichnet, daß die letzten Montageschritte chronologisch darin bestehen.
- den zweiten Wulst vom zylindrischen Abschnitt (20) bis zur Mitnahme auf die Außenseite der Felge abzuziehen,
- den zweiten Wulst (2'') auf dem zweiten Felgensitz (21'') zu montieren, und
- die Anordnung aufzupumpen.

6. Montageverfahren nach Anspruch 5, auf einer Felge J, die mindestens eine Montagenut (23) axial neben der Felgenleiste (24) aufweist, dadurch gekennzeichnet, daß der erste Schritt, der durchgeführt wird, nachdem man den zweiten Wulst (2'') auf der Felge J dargeboten hat, darin besteht, daß man den genannten zweiten Wulst in die Montagenut (23) einführt.

7. Montageverfahren nach einem der Ansprüche 1 bis 4, auf einer Felge, die einen zweiten Felgensitz (21'') aufweist, der ein axial innenliegendes Ende auf einem Kreis mit einem Durchmesser aufweist, der größer ist als der Durchmesser des Kreises, auf dem sich das axial innenliegende Ende des ersten Felgensitzes (21') befindet, ohne axial innenliegende Leiste, und bei der der zylindrische Abschnitt (20) keinen Positionierungsvorsprung (25) für die Stützauflage S aufweist,
dadurch gekennzeichnet, daß die letzten Montageschritte chronologisch darin bestehen,
- die Anordnung bis zum Aufsetzen des ersten Wulstes (2') auf seinen Felgensitz (21') zu verschieben, wobei sich der zweite Wulst (2'') seinerseits auf den zweiten Felgensitz (21'') unter der Schiebewirkung der Stützauflage S auflegt, und dann
- die Anordnung aufzupumpen.

8. Montageverfahren nach einem der Ansprüche 1 bis 4, auf einer Felge J, die einen zweiten Felgensitz (21'') aufweist, der ein axial innenliegendes Ende auf einem Kreis mit einem Durchmesser aufweist, der größer ist als der Durchmesser des Kreises, auf dem sich das axial innenliegende Ende des ersten Felgensitzes (21') befindet, wobei die genannte Felge J eine axial innenliegende Leiste aufweist, und bei der der zylindrische Abschnitt (20) mit einem Positionierungsvorsprung (25) für die Stützauflage S versehen ist,
dadurch gekennzeichnet, daß die letzten Montageschritte chronologisch darin bestehen,
- die Anordnung bis zum Aufsetzen des ersten Wulstes (2') auf seinen Felgensitz (21') Zu verschieben, und
- die Anordnung aufzupumpen, wobei sich der zweite Wulst (2'') von selbst auf seinen Platz auf dem zweiten Felgensitz (21'') unter Wirkung des Aufpumpdruckes begibt.

9. Montageverfahren nach einem der Ansprüche 7 oder 8, dadurch gekennzeichnet, daß man eine Felge J benutzt, die einen zweiten, nach außen geneigten Felgensitz (21'') aufweist, der axial auf der Außenseite mit einem Vorsprung (22'') versehen ist, und axial auf der Inneseite durch einen kegelstupfförmigen Abschnitt (26) verlängert ist, der eine Verbindung mit dem zylindrischen Abschnitt (20) herstellt,

10. Montageverfahren nach einem der Ansprüche 7 oder 8, dadurch gekennzeichnet, daß man eine Felge J benutzt, die einen zweiten Felgensitz (21'') aufweist, der nach hinten geneigt ist, axial auf der Innenseite um den zylindrischen Bereich (20) verlängert ist und axial auf der Außenseite mit einer Felgenleiste in einer Ausbildung versehen ist, die der von bekannten, üblichen und genormten Felgen ähnelt.

11. Montageverfahren nach einem der Ansprüche 1 bis 10, dadurch gekennzeichnet, daß man axial auf der Außenseite des Vorsprungs (22') und den Felgensitz (21') verlängernd einen kreisförmigen Metallring A verwendet, der einen Meridianschnitt darbietet, dessen radial außenliegende Seite eine Kegelstumpf-Erzeugende (3) ist, die mit der Richtung parallel zur Drehachse der Anordnung einen Winkel bildet, der zwischen 5° und 20° liegt, und dessen axial inneres Ende auf einem Kreis mit einem Durchmesser liegt, der gleich ist dem maximalen Durchmesser des Vorsprungs (22'), wobei der genannte Ring mit der Felge J durch Befestigungsmittel vereint ist,

12. Montageverfahren nach Anspruch 11, durch gekennzeichnet, daß der Ring A abnehmbar ist.
